# EUROPÄISCHE PATENTSCHRIFT

(11) **EP 3 114 364 B1**
(45) Veröffentlichungstag und Bekanntmachung des Hinweises auf die Patenterteilung: **30.10.2019**
(21) Anmeldenummer: 15708174.6
(22) Anmeldetag: 02.03.2015
(51) Int. Cl.: F16D 33/18, F16D 33/06, F16D 33/10

(54) **STAUDRUCKPUMPE FÜR EINE HYDRODYNAMISCHE MASCHINE**
DYNAMIC PRESSURE PUMP FOR AN HYDRODYNAMIC MACHINE
POMPE À PRESSION DYNAMIQUE POUR UNE MACHINE HYDRODYNAMIQUE

(30) Priorität: 03.03.2014 DE 102014203835
(43) Veröffentlichungstag der Anmeldung: 11.01.2017
(73) Patentinhaber: Voith Patent GmbH, 89522 Heidenheim (DE)
(72) Erfinder: VOGEL, Thomas, 91583 Schillingsfürst (DE); SCHIPS, Rainer, 73479 Ellwangen (DE)
(86) Internationale Anmeldenummer: PCT/EP2015/054259
(87) Internationale Veröffentlichungsnummer: WO 2015/132182

(56) Entgegenhaltungen:
- DE-A1-102007 056 495
- DE-C- 710 416
- NL-C- 28 065
- US-A- 1 937 364
- US-A- 3 747 348

## Beschreibung

Die vorliegende Erfindung betrifft eine Staudruckpumpe für eine hydrodynamische Maschine, beispielsweise eine hydrodynamische Kupplung oder einen hydrodynamischen Retarder, umfassend einen durch zwei beschaufelte Räder ausgebildeten, mit einem Arbeitsmedium, beispielsweise Öl oder Wasser oder ein Wassergemisch, befüllbaren Arbeitsraum, aus welchem das Arbeitsmedium mittels der Staudruckpumpe abgeführt werden kann. Ferner betrifft die vorliegende Erfindung eine hydrodynamische Maschine. Gattungsgemäße hydrodynamische Kupplungen mit einer entsprechenden Staudruckpumpe, auch als Schöpfrohr bezeichnet, sind beispielsweise in DE102007056495A1, DE710416C1, DE 42 24 728 C2, EP 0 801 244 B1, EP 0 864 771 B1, EP 1 141 568 B1, DE 103 27 133 B4 und DE 10 2007 056 495 A1 offenbart.

Eine solche Staudruckpumpe arbeitet nach dem folgenden Prinzip: Durch Antreiben zumindest des Primärrades erfährt das Arbeitsmedium im Arbeitsraum im beschaufelten Bereich des Primärrades nicht nur eine Beschleunigung in Zentrifugalrichtung radial nach außen, sondern es wird auch über dem Umfang der Drehachse in Drehrichtung des Primärrades beschleunigt. Wenn der Arbeitsraum arbeitsmediumleitend mit einem Nebenraum verbunden ist, so läuft entsprechend das Arbeitsmedium auch in dem Nebenraum über der Drehachse in Richtung der Drehung des Primärrades um. Dementsprechend kann durch Anordnen einer Einlassöffnung der Staudruckpumpe in Umfangsrichtung zur Drehrichtung entgegengesetzt zur Strömungsrichtung des Arbeitsmediums vor beziehungsweise in der Einlassöffnung ein Staudruck erzeugt werden, der zu einem Fördern von Arbeitsmedium aus dem Arbeitsraum oder aus dem Nebenraum in den mit der Einlassöffnung versehen Arbeitsmediumeinlass der Staudruckpumpe führt. Am anderen arbeitsmediumleitenden Ende ist die Staudruckpumpe mit einem externen Arbeitsmediumkreislauf oder einem Vorratsraum für Arbeitsmedium verbunden, sodass das in den Arbeitsmediumeinlass der Staudruckpumpe mittels des Staudruckes geförderte Arbeitsmedium in den externen Arbeitsmediumkreislauf, den Vorratsraum oder die Umgebung gefördert wird und entsprechend, wenn keine zusätzliche Rückführung in den Arbeitsraum vorgesehen ist, im Arbeitsraum nicht mehr zur Verfügung steht. Hierdurch entleert sich der Arbeitsraum. Bei einer zusätzlichen Rückführung kann die Staudruckpumpe auch zu einem ständigen Austausch von Arbeitsmedium aus dem Arbeitsraum mit dem externen Arbeitsmediumkreislauf oder mit dem Vorratsraum verwendet werden, beispielsweise um das Arbeitsmedium zu kühlen.

Mittels einer solchen Staudruckpumpe kann die hydrodynamische Maschine als füllungsgesteuerte hydrodynamische Maschine ausgeführt werden, wie sie die vorliegende Erfindung gemäß einer Ausführungsform betrifft, bei welcher der Füllungsgrad des Arbeitsraumes gezielt variabel eingestellt werden kann.

Aufgrund dessen, dass sich der Umlauf des Arbeitsmediums in Umfangsrichtung über der Drehachse anhand der Drehrichtung des beschaufelten Primärrades einstellt, die jedoch von Anwendungsfall zu Anwendungsfall variieren kann - entweder gibt es eine Drehrichtung betrachtet auf die Rückseite des Primärschaufelrades im Uhrzeigersinn oder entgegen dem Uhrzeigersinn -, sind mindestens zwei verschiedene Ausführungsformen von Staudruckpumpen für eine hydrodynamische Maschine erforderlich, je nachdem, mit welcher Drehrichtung die hydrodynamische Maschine arbeiten soll. Dies führt nicht nur zu einer bei der Konstruktion, Herstellung und Ersatzteilbevorratung unerwünschten Teilevielfalt, sondern birgt auch die Gefahr eines fehlerhaften Einbaus einer hydrodynamischen Maschine, wenn diese nämlich beispielsweise im Antrieb eines Förderbandes auf der falschen Seite des Förderbandes in einem Antrieb eingebaut wird. Gegebenenfalls ist dann ein Antriebsumbau von einer Trommelseite des Förderbandantriebes auf die andere Seite der Trommel, mittels welcher das Band angetrieben wird, notwendig.
Eine Lösung des zuvor genannten Problems kann durch eine Staudruckpumpe mit zwei in entgegengesetzte Umfangsrichtungen der hydrodynamischen Maschine ausgerichteten Einlassöffnungen erreicht werden, wobei solche Einlassöffnungen jedoch mit einer Ventilsteuerung oder einem Rückschlagventil derart wahlweise verschließbar sein müssen, dass das Arbeitsmedium nicht durch die erste Einlassöffnung hinein und anschließend aus der zweiten Einlassöffnung wieder heraus aus der Staudruckpumpe strömen kann. Ein solches Ventil führt jedoch zu unerwünschten Strömungsgeräuschen, die in vielen Anwendungen nicht akzeptabel sind.

Der vorliegenden Erfindung liegt daher die Aufgabe zugrunde, eine hydrodynamische Maschine der eingangs dargestellten Art sowie eine Staudruckpumpe hierfür anzugeben, bei welcher die genannten Nachteile vermindert werden. Zugleich soll die hydrodynamische Maschine vorteilhaft zumindest annähernd denselben Wirkungsgrad wie bekannte Bauformen erreichen. Zugleich soll die genannte unerwünschte Geräuschentwicklung im Vergleich zu Staudruckpumpen mit nur einer Einlassöffnung weitgehend vermieden werden.

Die erfindungsgemäße Aufgabe wird durch eine Staudruckpumpe mit den Merkmalen von Anspruch 1 sowie eine hydrodynamische Maschine mit den Merkmalen von Anspruch 8 gelöst. In den abhängigen Ansprüchen sind vorteilhafte und besonders zweckmäßige Ausgestaltungen der Erfindung angegeben.

Im Einzelnen weist eine erfindungsgemäße hydrodynamische Maschine ein über einer Drehachse antreibbares beschaufeltes Primärrad auf, sowie ein stationäres oder ebenfalls umlaufendes beschaufeltes Sekundärrad, die miteinander einen mit einem Arbeitsmedium befüllbaren oder stets befüllten Arbeitsraum ausbilden. Ferner ist eine Staudruckpumpe vorgesehen, mittels welcher wenigstens mittelbar Arbeitsmedium aus dem Arbeitsraum und insbesondere aus der gesamten hydrodynamischen Maschine heraus ausgetragen werden kann. Unter mittelbarem Austragen ist dabei zu verstehen, dass die Staudruckpumpe nicht unmittelbar auf das Arbeitsmedium im Arbeitsraum wirken muss, sondern dass das Austragen auch über einen zwischengeschalteten Nebenraum, in welchen Arbeitsmedium aus dem Arbeitsraum strömt, wobei der Befüllungsgrad des Arbeitsraumes vom Befüllungsgrad des Nebenraumes abhängig ist, erfolgen kann.

Die Staudruckpumpe weist einen ersten Arbeitsmediumeinlass auf, der in den Arbeitsraum oder in den mit diesem arbeitsmediumleitend verbundenen Nebenraum ragt und eine erste Einlassöffnung aufweist, die in Umfangsrichtung zur Drehachse ausgerichtet ist. Somit kann sich, wenn das Arbeitsmedium durch das Primärrad über der Drehachse in Umlauf versetzt wird, zusätzlich zu einer Beschleunigung radial nach außen, und diese erste Einlassöffnung der Strömungsrichtung des Arbeitsmediums in Umfangsrichtung entgegengesetzt ist, vor der und in der Einlassöffnung ein Staudruck ausbilden, mittels welchem das Arbeitsmedium aus dem Arbeitsraum beziehungsweise aus dem Nebenraum in den Arbeitsmediumeinlass gefördert wird, vorausgesetzt, die Antriebsrichtung des Primärrades ist in Richtung in die Einlassöffnung hinein ausgerichtet.

Erfindungsgemäß weist die Staudruckpumpe jedoch einen zusätzlichen zweiten Arbeitsmediumeinlass auf, der ebenfalls in den Arbeitsraum oder den mit diesem arbeitsmediumleitend verbundenen Nebenraum ragt und eine zweite Einlassöffnung aufweist, die in Umfangsrichtung zur Drehachse entgegengesetzt zu der ersten Einlassöffnung ausgerichtet ist. Dieser zweite Arbeitsmediumeinlass dient dazu, dass vor diesem beziehungsweise in diesem der entsprechende Staudruck aufgebaut wird, wenn das Primärrad über der Drehachse in der anderen Richtung angetrieben wird und somit das Arbeitsmedium in Umfangsrichtung entgegengesetzt zu der zweiten Einlassöffnung und damit über die erste Einlassöffnung hinweg, die ja dann in Strömungsrichtung des Arbeitsmediums ausgerichtet ist, strömt. Demnach arbeitet die Staudruckpumpe unabhängig von der Drehrichtung des beschaufelten Primärrades. Erfindungsgemäß sind der erste Arbeitsmediumeinlass und der zweite Arbeitsmediumeinlass in Strömungsrichtung des Arbeitsmediums durch die Staudruckpumpe gesehen hinter den beiden Einlassöffnungen zu einem gemeinsamen Arbeitsmediumkanal arbeitsmediumleitend zusammengeführt.

Gemäß der Erfindung erstrecken sich der erste Arbeitsmediumeinlass und der zweite Arbeitsmediumeinlass in Strömungsrichtung des Arbeitsmediums gesehen vor dem gemeinsamen Arbeitsmediumkanal getrennt durch eine Trennwand gleichgerichtet nebeneinander. Das bedeutet, dass die durch die beiden Arbeitsmediumeinlässe gebildeten Strömungskanäle für das Arbeitsmedium, über einem Abschnitt, bevor sich diese zu dem gemeinsamen Arbeitsmediumkanal vereinen, benachbart zueinander verlaufen, insbesondere parallel und/oder äquidistant zueinander und nur durch die Trennwand voneinander getrennt sind. Die Trennwand kann dabei als separates Bauteil nach dem Herstellen der Arbeitsmediumeinlässe eingefügt werden oder gemeinsam mit diesen einstückig hergestellt werden.

Insbesondere erstrecken sich der erste Arbeitsmediumeinlass und der zweite Arbeitsmediumeinlass ausgehend von ihren Einlassöffnungen zunächst aufeinander zu und anschließend in der genannten Gleichrichtung beziehungsweise äquidistanten Anordnung zueinander, bevor sie sich zu dem gemeinsamen Arbeitsmediumkanal vereinen.

Vorteilhaft weisen die beiden Arbeitsmediumeinlässe zumindest von ihren Einlassöffnungen bis zu dem gemeinsamen Arbeitsmediumkanal, insbesondere von ihren Einlassöffnungen bis zu einem ihnen abgewandten Ende, sozusagen dem Auslassende, des gemeinsamen Arbeitsmediumkanals einen freien unveränderbaren Strömungsquerschnitt auf. Das bedeutet, dass kein den Strömungsquerschnitt verstellendes Element, insbesondere kein Ventil, wie Absperrventil oder Rückschlagventil, vorgesehen ist, welches den Strömungsquerschnitt für das Arbeitsmedium in dem genannten Bereich mehr oder minder einschränken kann.

Von Vorteil ist es, wenn sich der erste Arbeitsmediumeinlass und der zweite Arbeitsmediumeinlass ausgehend von ihren Einlassöffnungen zunächst aufeinander zu und anschließend jeweils in einem Bogen in eine gemeinsame Richtung erstrecken. Die Bögen können beispielsweise einen Winkel von im Wesentlichen oder genau 90° überdecken. Jedoch sind auch Abweichungen hiervon zulässig, beispielsweise um ± 20° oder um ±10°.

Gemäß einer Ausführungsform der Erfindung schließt sich an die beiden Bögen in Strömungsrichtung des Arbeitsmediums gesehen eine gemeinsame Umlenkung an. Eine solche Umlenkung kann beispielsweise einen Winkel von 70° bis 110°, insbesondere von 90° aufweisen beziehungsweise überdecken.

Gemäß einer Ausführungsform der Erfindung reicht die Trennwand bis zum in Strömungsrichtung des Arbeitsmediums gesehen hinteren Ende, das heißt Auslassende der Umlenkung, wobei sich anschließend der gemeinsame Arbeitsmediumkanal anschließen kann, der insbesondere in Richtung der Drehachse oder parallel hierzu verläuft.

Obwohl vorliegend die Funktion der hydrodynamischen Maschine anhand eines Umlaufens beziehungsweise Strömens des Arbeitsmediums in Umfangsrichtung über der Drehachse dargestellt wird, ist es gemäß einer Ausführungsform der Erfindung auch möglich, dass die Staudruckpumpe angetrieben wird, um einen entsprechenden Staudruck in einer der beiden Einlassöffnungen zu erzeugen, zu verstärken oder zu vermindern. Somit ist es möglich, Arbeitsmedium aus einem nicht in Umfangsrichtung umlaufenden Raum zu fördern oder den Staudruck durch Antreiben der Staudruckpumpe gezielt zu erhöhen oder zu erniedrigen.

Um Schwingungen und/oder Geräusche zu reduzieren, die in der Staudruckpumpe aufgrund des Vorsehens von zwei entgegengerichteten Einlassöffnungen auftreten können, ist es günstig, wenn der gemeinsame Arbeitsmediumkanal eine arbeitsmediumführende Länge aufweist, die ein Vielfaches der arbeitsmediumführenden Längen jeweils von einer der beiden Einlassöffnungen bis zu dem gemeinsamen Arbeitsmediumkanal beträgt. Beispielsweise beträgt die arbeitsmediumführende Länge des gemeinsamen Arbeitsmediumkanals mindestens das Dreifache, Fünffache, Siebenfache oder Zehnfache der Länge von einer Einlassöffnung bis zu dem gemeinsamen Arbeitsmediumkanal, das heißt bis zu dessen Beginn, bezogen auf die Strömungsrichtung des Arbeitsmediums durch die Staudruckpumpe.

Der gemeinsame Arbeitsmediumkanal kann sich ausschließlich geradlinig erstrecken oder wenigstens eine Umlenkung aufweisen, beispielsweise von 70° bis 110°, insbesondere von im Wesentlichen oder genau 90°.

Um Schwingungen und/oder Geräusche weiter zu reduzieren, kann in dem gemeinsamen Arbeitsmediumkanal ein Diffusor ausgebildet sein, das heißt der gemeinsame Arbeitsmediumkanal erweitert sich in Strömungsrichtung des Arbeitsmediums. Dieser Diffusor ist insbesondere hinter der Umlenkung positioniert.

Im gemeinsamen Arbeitsmediumkanal und/oder in Strömungsrichtung davor kann wenigstens eine Einschnürung des Strömungsquerschnitts vorgesehen sein. Insbesondere ist unmittelbar vor dem Eintritt in den Diffusor eine Einschnürung vorgesehen.

Gemäß einer Ausführungsform der Erfindung weist die Staudruckpumpe eine Abströmöffnung beziehungsweise einen Abströmkanal auf, der in Richtung der Drehachse der hydrodynamischen Maschine verläuft. Über diese Abströmöffnung beziehungsweise diesen Abströmkanal tritt das Arbeitsmedium, das mittels des Staudruckes in den entsprechenden Arbeitsmediumeinlass gefördert wurde, aus der Staudruckpumpe aus. Dieser Abströmkanal wird insbesondere durch den letzten Abschnitt des gemeinsamen Arbeitsmediumkanals gebildet.

Gemäß einer Ausführungsform der Erfindung ist die hydrodynamische Maschine als hydrodynamische Kupplung ausgeführt und umfasst demnach ein beschaufeltes Sekundärrad, das ebenfalls über der Drehachse umläuft. Das beschaufelte Sekundärrad wird durch Drehmomentübertragung beziehungsweise Antriebsleistungsübertragung mittels des hydrodynamischen Kreislaufes des Arbeitsmediums im Arbeitsraum vom beschaufelten Primärrad angetrieben. Ferner ist insbesondere ein Vorratsraum für nicht im Arbeitsraum befindliches Arbeitsmedium vorgesehen, der derart an der Staudruckpumpe angeschlossen ist, dass diese das zumindest mittelbar aus dem Arbeitsraum ausgetragene Arbeitsmedium in den Vorratsraum fördert, wobei der Vorratsraum gemäß einer Ausführungsform ebenfalls über der Drehachse umläuft oder gemäß einer anderen Ausführungsform stationär, das heißt nicht umlaufend, angeordnet ist.

Die Staudruckpumpe kann, wie dargelegt, gemäß einer ersten Ausführungsform stationär gehalten sein, sodass die Arbeitsmediumeinlässe nicht umlaufen, oder angetrieben werden, um dadurch zumindest teilweise den gewünschten Staudruck vor den Arbeitsmediumeinlässen zu erzeugen oder zu variieren.

Eine erfindungsgemäße Staudruckpumpe, die insbesondere für eine hydrodynamische Maschine der hier dargestellten Art ausgeführt ist, umfasst einen ersten Arbeitsmediumeinlass mit einer ersten Einlassöffnung und einen zweiten Arbeitsmediumeinlass mit einer zweiten Einlassöffnung, wobei die erste Einlassöffnung und die zweite Einlassöffnung entgegengesetzt zueinander ausgerichtet sind und der erste Arbeitsmediumeinlass und der zweite Arbeitsmediumeinlass hinter den beiden Einlassöffnungen zu einem gemeinsamen Arbeitsmediumkanal arbeitsmediumleitend zusammengeführt sind. Wie anhand der hydrodynamischen Maschine zuvor dargestellt wurde, erstrecken sich die beiden Arbeitsmediumeinlässe in Strömungsrichtung des Arbeitsmediums gesehen vor dem gemeinsamen Arbeitsmediumkanal getrennt durch eine Trennwand gleichgerichtet nebeneinander. Bezüglich der weiteren Details wird auf die Ausführungen zu der hydrodynamischen Maschine verwiesen.

Die erfindungsgemäße Lösung ist sowohl für hydrodynamische Kupplungen mit nur einem Arbeitsraum als auch sogenannte Doppelkupplungen anwendbar.

Die Erfindung soll nachfolgend anhand eines Ausführungsbeispiels und den Figuren exemplarisch erläutert werden.

Es zeigen:
- Figur 1: eine schematische Darstellung einer Ausführungsform der Erfindung in einem Axialschnitt durch eine hydrodynamische Kupplung;
- Figur 2: eine vorteilhafte Gestaltung einer erfindungsgemäßen Staudruckpumpe, beispielsweise für eine hydrodynamische Maschine;
- Figur 3: die erfindungsgemäße Gestaltung einer Staudruckpumpe entsprechend der Figur 2 in einer geschnittenen aufgeklappten Ansicht.

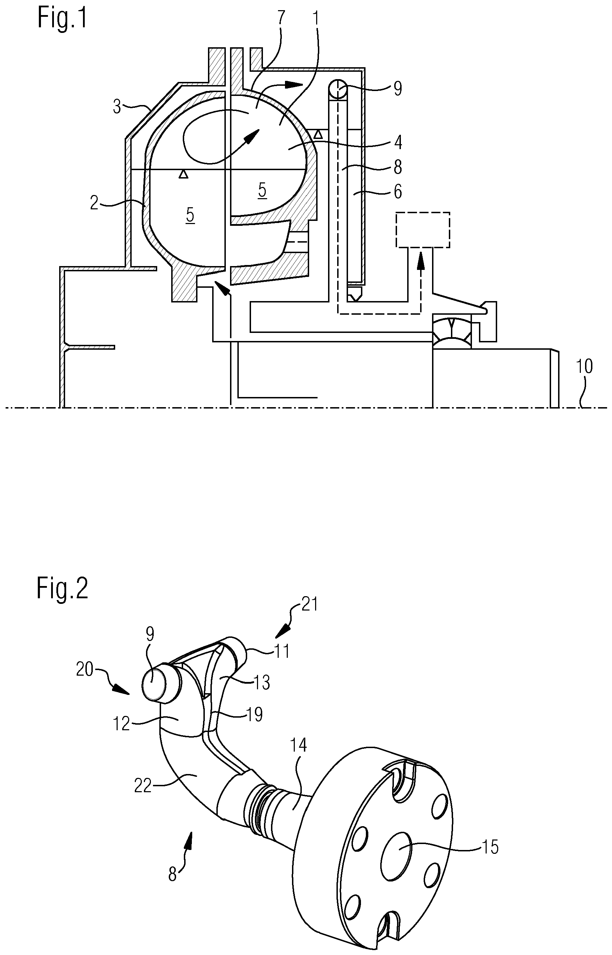

In der Figur 1 ist in einer schematischen Darstellung eine hydrodynamische Kupplung mit einem Primärrad 1 und einem Sekundärrad 2 dargestellt, die von einem Gehäuse 3 umschlossen werden und miteinander einen mit Arbeitsmedium befüllten Arbeitsraum 4 ausbilden. Im Bereich des Arbeitsraumes 4 tragen das Primärrad 1 und das Sekundärrad 2 jeweils eine Vielzahl von Schaufeln 5, um eine hydrodynamische Kreislaufströmung des Arbeitsmediums im Arbeitsraum 4 auszubilden.

Außerhalb des Arbeitsraumes 4 ist ein Nebenraum 6 in der hydrodynamischen Kupplung, hier ebenfalls vom Gehäuse 3 umschlossen, vorgesehen. Das Arbeitsmedium strömt über einen Arbeitsmediumauslass 7 aus dem Arbeitsraum 4 in den Nebenraum 6. Zum Austragen von Arbeitsmedium aus dem Nebenraum 6 ist eine Staudruckpumpe 8 vorgesehen, die in den Nebenraum 6 derart hineinragt, dass ihre beiden Einlassöffnungen (in der Figur 1 ist nur die erste Einlassöffnung 9 erkennbar, da die zweite Einlassöffnung entgegengesetzt ausgerichtet ist) in das im Nebenraum 6 befindliche Arbeitsmedium eintauchen. Wenn sich nun entweder durch Umlaufen des Arbeitsmediums in Umfangsrichtung zur Drehachse 10, über welche auch das Primärrad 1 und das Sekundärrad 2 umlaufen, und/oder durch Antreiben der Staudruckpumpe 8 ein Staudruck des Arbeitsmediums vor der ersten Einlassöffnung 9 (oder der zweiten Einlassöffnung) einstellt, so wird Arbeitsmedium aus dem Nebenraum 6 über die Staudruckpumpe 8 herausgefördert, beispielsweise in einem hier nicht näher dargestellten externen Arbeitsmediumkreislauf oder in einen Vorratsraum, siehe den Pfeil mit der gestrichelten Linie und die gestrichelte Box, die entweder den externen Arbeitsmediumkreislauf oder den Vorratsraum darstellen kann.

Die Zufuhr von Arbeitsmedium in den Arbeitsraum 4 ist hier nur exemplarisch dargestellt, beispielsweise über einen Kanal in der Antriebswelle oder Abtriebswelle.

Abweichend von der Darstellung in der Figur 1 könnte das Gehäuse 3 auch als umlaufendes Gehäuse ausgeführt sein, das beispielsweise mit dem Primärrad 1 oder dem Sekundärrad 2 drehfest verbunden ist.

In der Figur 2 ist nun eine vorteilhafte erfindungsgemäße Ausführungsform einer Staudruckpumpe 8 gezeigt. Hier erkennt man die beiden entgegengesetzt zueinander ausgerichteten Einlassöffnungen für das Arbeitsmedium, nämlich die erste Einlassöffnung 9 und die zweite Einlassöffnung 11. Das Arbeitsmedium strömt entweder über die erste Einlassöffnung 9 eines ersten Arbeitsmediumeinlasses 12 oder die zweite Einlassöffnung 11 eines zweiten Arbeitsmediumeinlasses 13 in den gemeinsamen Arbeitsmediumkanal 14, der sich an den ersten Arbeitsmediumeinlass 12 und den zweiten Arbeitsmediumeinlass 13 anschließt und anschließend über eine Abströmöffnung 15 der Staudruckpumpe 8, die vorliegend in Axialrichtung ausgerichtet ist, aus der Staudruckpumpe 8 heraus. Der gemeinsame Arbeitsmediumkanal 14 weist vorteilhaft eine größere arbeitsmediumführende Länge auf, als jeweils der erste Arbeitsmediumeinlass 12 und der zweite Arbeitsmediumeinlass 13.

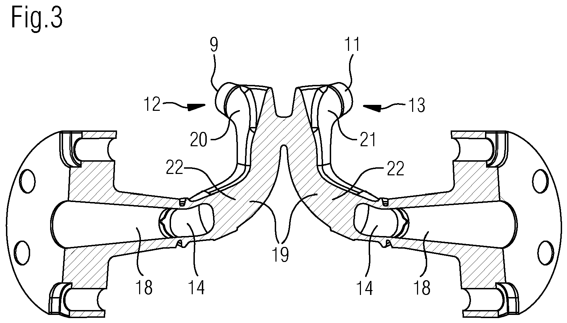

Bei dem Ausführungsbeispiel gemäß der Figur 2 sind der erste Arbeitsmediumeinlass 12 und der zweite Arbeitsmediumeinlass 13 jeweils bogenförmig gestaltet und nicht direkt miteinander arbeitsmediumleitend verbunden, beziehungsweise sie weisen keinen Verbindungskanal auf. Die Bögen des ersten Arbeitsmediumeinlasses 12 und des zweiten Arbeitsmediumeinlasses 13 sind mit 20 und 21 bezeichnet. Sie dienen dazu, den zunächst entgegengerichteten Strömungskanalverlauf für das Arbeitsmedium, beginnend in der ersten Einlassöffnung 9 und der zweiten Einlassöffnung 11 gleichzurichten, sodass im weiteren Verlauf der erste Arbeitsmediumeinlass 12 und der zweite Arbeitsmediumeinlass 13 sich gleichgerichtet nebeneinander erstrecken, bevor sie in den gemeinsamen Arbeitsmediumkanal 14 übergehen. Im gezeigten Ausführungsbeispiel ist in dem Abschnitt des ersten Arbeitsmediumeinlasses 12 und des zweiten Arbeitsmediumeinlasses 13, über welchen sich diese gleichgerichtet nebeneinander erstrecken, eine gemeinsame Umlenkung 22 vorgesehen. Um nun zu verhindern, dass das Arbeitsmedium aus dem ersten Arbeitsmediumeinlass 12 in den zweiten Arbeitsmediumeinlass 13 beziehungsweise aus der ersten Einlassöffnung 9 in die zweite Einlassöffnung 11 strömen kann, sind der erste Arbeitsmediumeinlass 12 und der zweite Arbeitsmediumeinlass 13 durch eine Trennwand 19 voneinander getrennt, die hier bis zur Mündung der beiden Arbeitsmediumeinlässe 12, 13 in den gemeinsamen Arbeitsmediumkanal 14 reicht. In jedem Fall sollte diese gemeinsame Trennwand 19 soweit in Strömungsrichtung des Arbeitsmediums, beginnend an den beiden Einlassöffnungen 9, 11 reichen, dass der Druck am Ende der Trennwand 19, sozusagen am Austrittsende der beiden Arbeitsmediumeinlässe 12, 13 derart ausgehend von dem Staudruck in einer der beiden Einlassöffnungen 9, 11 reduziert wurde, dass ein Überströmen in den jeweils anderen Arbeitsmediumeinlass 12, 13 vermieden wird. Eine zusätzliche Reduzierung des Druckes an dieser Mündungsstelle beziehungsweise am austrittsseitigen Ende der Trennwand 19 kann, wie nachfolgend anhand der Figur 3 noch näher erläutert wird, erreicht werden, indem in dem gemeinsamen Arbeitsmediumkanal 14 ein Diffusor 18 ausgeführt ist.

In der Figur 3 erkennt man ferner nochmals die Trennwand 19, die sich entlang der beiden Bögen 20, 21 und der in Strömungsrichtung des Arbeitsmediums folgenden Umlenkung 22 bis zu dem Beginn des gemeinsamen Arbeitsmediumkanals 14 erstreckt. Sowohl die beiden Bögen 20, 21 als auch die Umlenkung 22 weisen in dem gezeigten Ausführungsbeispiel einen Winkel von etwa 90° auf.

Der gemeinsame Arbeitsmediumkanal 14 verläuft senkrecht zur Einströmrichtung des Arbeitsmediums in die erste Einlassöffnung 9 und die zweite Einlassöffnung 11 beziehungsweise bei Verwendung in einer hydrodynamischen Maschine vorteilhaft in Richtung der Drehachse 10, vergleiche die Figur 1.

Bei dem im gemeinsamen Strömungskanal 14 vorgesehenen Diffusor 18 erweitert sich der Strömungsquerschnitt für das Arbeitsmedium mit zunehmender Lauflänge, sodass der Druck am hinteren Ende der Trennwand 19, das heißt zu Beginn des gemeinsamen Arbeitsmediumkanals 14, reduziert wird.

### Bezugszeichenliste

- 1: Primärrad
- 2: Sekundärrad
- 3: Gehäuse
- 4: Arbeitsraum
- 5: Schaufeln
- 6: Nebenraum
- 7: Arbeitsmediumauslass
- 8: Staudruckpumpe
- 9: erste Einlassöffnung
- 10: Drehachse
- 11: zweite Einlassöffnung
- 12: Arbeitsmediumeinlass
- 13: Arbeitsmediumauslass
- 14: Arbeitsmediumkanal
- 15: Abströmöffnung
- 18: Diffusor
- 19: Trennwand
- 20: Bogen
- 21: Bogen
- 22: Umlenkung

## Patentansprüche

1. Staudruckpumpe (8) umfassend einen ersten Arbeitsmediumeinlass (12) mit einer ersten Einlassöffnung (9) und einen zweiten Arbeitsmediumeinlass (13) mit einer zweiten Einlassöffnung (11), wobei die erste Einlassöffnung (9) und die zweite Einlassöffnung (11) entgegengesetzt zueinander ausgerichtet sind und der erste Arbeitsmediumeinlass (12) und der zweite Arbeitsmediumeinlass (13) hinter den beiden Einlassöffnungen (9, 11) zu einem gemeinsamen Arbeitsmediumkanal (14) arbeitsmediumleitend zusammengeführt sind;
**dadurch gekennzeichnet, dass**
der erste Arbeitsmediumeinlass (12) und der zweite Arbeitsmediumeinlass (13) in Strömungsrichtung des Arbeitsmediums gesehen vor dem gemeinsamen Arbeitsmediumkanal (14) sich getrennt durch eine Trennwand (19) nebeneinander gleichgerichtet erstrecken.

2. Staudruckpumpe (8) gemäß Anspruch 1, **dadurch gekennzeichnet, dass** die beiden Arbeitsmediumeinlässe (12, 13) zumindest von ihren Einlassöffnungen (9, 11) bis zu dem gemeinsamen Arbeitsmediumkanal (14) oder bis zu einem von ihnen abgewandten Ende des gemeinsamen Arbeitsmediumkanals (14) einen freien unveränderbaren Strömungsquerschnitt aufweisen.

3. Staudruckpumpe (8) gemäß einem der Ansprüche 1 oder 2, **dadurch gekennzeichnet, dass** sich der erste Arbeitsmediumeinlass (12) und der zweite Arbeitsmediumeinlass (13) ausgehend von ihren Einlassöffnungen (9, 11) zunächst aufeinander zu und anschließend jeweils in einem Bogen (20, 21) in eine gemeinsame Richtung erstrecken.

4. Staudruckpumpe (8) gemäß Anspruch3, **dadurch gekennzeichnet, dass** sich an die beiden Bögen (20, 21) in Strömungsrichtung des Arbeitsmediums eine gemeinsame Umlenkung (22) anschließt, insbesondere mit einem Winkel von 70° bis 110°, 80° bis 100° oder von 90°.

5. Staudruckpumpe (8) gemäß Anspruch4, **dadurch gekennzeichnet, dass** die Trennwand (19) bis in die Umlenkung (22) oder bis zu einem in Strömungsrichtung des Arbeitsmediums gesehen hinteren Ende der Umlenkung (22) reicht und sich anschließend der gemeinsame Arbeitsmediumkanal (14) anschließt, der insbesondere in Richtung der Drehachse (10) oder parallel hierzu verläuft.

6. Staudruckpumpe (8) gemäß einem der Ansprüche 1 bis 5, **dadurch gekennzeichnet, dass** der gemeinsame Arbeitsmediumkanal (14) eine arbeitsmediumführende Länge aufweist, die ein Vielfaches der arbeitsmediumführenden Länge jeweils von einem der beiden Einlassöffnungen (9, 11) bis zu dem gemeinsamen Arbeitsmediumkanal (14) beträgt, insbesondere mindestens die dreifache, fünffache, siebenfache oder zehnfache Länge.

7. Staudruckpumpe (8) gemäß einem der Ansprüche 1 bis 6, **dadurch gekennzeichnet, dass** der gemeinsame Arbeitsmediumkanal (14) einen Diffusor (18) aufweist.

8. Hydrodynamische Maschine
mit einem über einer Drehachse (10) antreibbaren beschaufelten Primärrad (1) und einem beschaufelten Sekundärrad (2), die miteinander einen mit einem Arbeitsmedium befüllbaren oder befüllten Arbeitsraum (4) ausbilden und
mit einer Staudruckpumpe (8) zum wenigstens mittelbaren Austragen von Arbeitsmedium aus dem Arbeitsraum (4) oder aus der hydrodynamischen Maschine, nach einem der Ansprüche 1 bis 7, wobei
der erste und der zweite Arbeitsmediumeinlass (12, 13) der Staudruckpumpe (8) in den Arbeitsraum (4) oder einen mit diesem arbeitsmediumleitend verbundenen Nebenraum (6) ragen und die erste und zweite Einlassöffnung (8, 11), in Umfangsrichtung zur Drehachse (10) ausgerichtet sind

9. Hydrodynamische Maschine nach Anspruch 8, **dadurch gekennzeichnet, dass** die hydrodynamische Maschine als hydrodynamische Kupplung ausgeführt ist, wobei das beschaufelte Sekundärrad (2) mittels eines Arbeitsmediumkreislaufes im Arbeitsraum (4) vom beschaufelten Primärrad (1) über der Drehachse (10) antreibbar ist, und ein Vorratsraum für nicht im Arbeitsraum befindliches Arbeitsmedium vorgesehen ist, der derart an der Staudruckpumpe (8) angeschlossen ist, dass diese das zumindest mittelbar aus dem Arbeitsraum (4) ausgetragene Arbeitsmedium in den Vorratsraum fördert, wobei der Vorratsraum ebenfalls über der Drehachse (10) umlaufend oder stationär angeordnet ist.

10. Hydrodynamische Maschine gemäß einem der Ansprüche 8 bis 9, **dadurch gekennzeichnet, dass** die Arbeitsmediumeinlässe (12, 13) der Staudruckpumpe (8) stationär gehalten werden oder durch Antrieb der Staudruckpumpe (8) über der Drehachse (10) umlaufen.

## Claims

1. Dynamic pressure pump (8) for a hydrodynamic machine, comprising a first operating medium inlet (12) with a first inlet opening (9) and a second operating medium inlet (13) with a second inlet opening (11), the first inlet opening (9) and the second inlet opening (11) being oriented in an opposed manner with respect to one another, and the first operating medium inlet (12) and the second operating medium inlet (13) being combined downstream of the two inlet openings (9, 11) in a manner which conducts operating medium to form a common operating medium duct (14);
the first operating medium inlet (12) and the second operating medium inlet (13) extending, upstream of the common operating medium duct (14) as viewed in the flow direction of the operating medium, oriented identically next to one another in a manner which is departed by way of a dividing wall (19).

2. Dynamic pressure pump (8) according to Claim 1, **characterized in that** the two operating medium inlets (12, 13) have a free unchangeable flow cross section at least from their inlet openings (9, 11) as far as the common operating medium duct (14) or as a far as an end of the common operating medium duct (14), which end faces away from the said inlet openings (9, 11).

3. Dynamic pressure pump (8) according to either of Claims 1 and 2, **characterized in that**, starting from their inlet openings (9, 11), the first operating medium inlet (12) and the second operating medium inlet (13) firstly extend towards one another and subsequently extend in each case in an arc (20, 21) in a common direction.

4. Dynamic pressure pump (8) according to Claim 3, **characterized in that** the two arcs (20, 21) in the flow direction of the operating medium are adjoined by a common deflection (22), in particular with an angle of from 70° to 110°, of from 80° to 100° or of 90°.

5. Dynamic pressure pump (8) according to Claim 4, **characterized in that** the dividing wall (19) reaches as far as into the deflection (22) or as far as a rear end (as viewed in the flow direction of the operating medium) of the deflection (22) and is subsequently adjoined by the common operating medium duct (14) which runs, in particular, in the direction of the rotational axis (10) or parallel thereto.

6. Dynamic pressure pump (8) according to one of Claims 1 to 5, **characterized in that** the common operating medium duct (14) has an operating medium-conducting length which is a multiple of the operating medium-conducting length in each case of one of the two inlet openings (9, 11) as far as the common operating medium duct (14), in particular is at least three times, five times, seven times or ten times the length.

7. Dynamic pressure pump (8) according to one of Claims 1 to 6, **characterized in that** the common operating medium duct (14) has a diffuser (18).

8. Hydrodynamic machine
having a bladed primary wheel (1) which can be driven about a rotational axis (10) and a bladed secondary wheel (2) which, with one another, configure an operating space (4) which can be filled or is filled with an operating medium, and
having a dynamic pressure pump (8) for the at least indirect discharge of operating medium from the operating space (4) or from the hydrodynamic machine, according to one of Claims 1 to 7,
the first and the second operating medium inlet (12, 13) of the dynamic pressure pump (8) protruding into the operating space (4) or an auxiliary space (6) which is connected to the said operating space (4) in an operating medium-conducting manner, and the first and second inlet opening (8, 11) being oriented in the circumferential direction with respect to the rotational axis (10).

9. Hydrodynamic machine according to Claim 8, **characterized in that** the hydrodynamic machine is configured as a hydrodynamic coupling, it being possible for the bladed secondary wheel (2) to be driven by the bladed primary wheel (1) about the rotational axis (10) by means of an operating medium circuit in the operating space (4), and a storage space being provided for operating medium which is not situated in the operating space, which storage space is connected to the dynamic pressure pump (8) in such a way that the latter conveys the operating medium which is discharged at least indirectly from the operating space (4) into the storage space, the storage space likewise being arranged so as to be stationary or circulating above the rotational axis (10).

10. Hydrodynamic machine according to either of Claims 8 and 9, **characterized in that** the operating medium inlets (12, 13) of the dynamic pressure pump (8) are held in a stationary manner or circulate above the rotational axis (10) by way of driving of the dynamic pressure pump (8).

## Revendications

1. Pompe à pression dynamique (8) pour une machine hydrodynamique, comprenant une première entrée de fluide de travail (12) dotée d'une première ouverture d'entrée (9) et une deuxième entrée de fluide de travail (13) dotée d'une deuxième ouverture d'entrée (11), la première ouverture d'entrée (9) et la deuxième ouverture d'entrée (11) étant orientées à l'opposé l'une de l'autre et la première entrée de fluide de travail (12) et la deuxième entrée de fluide de travail (13) étant réunies derrière les deux ouvertures d'entrée (9, 11) en un canal de fluide de travail commun (14) conduisant le fluide de travail ;
la première entrée de fluide de travail (12) et la deuxième entrée de fluide de travail (13), avant le canal de fluide de travail commun (14) vues dans le sens de l'écoulement du fluide de travail, s'étendant séparément à travers une paroi de séparation (19) dans la même direction l'une à côté de l'autre.

2. Pompe à pression dynamique (8) selon la revendication 1, **caractérisée en ce que** les deux entrées de fluide de travail (12, 13) possèdent une section transversale d'écoulement libre non modifiable au moins depuis leurs ouvertures d'entrée (9, 11) jusqu'au canal de fluide de travail commun (14) ou jusqu'à une extrémité du canal de fluide de travail commun (14) à l'opposé de celles-ci.

3. Pompe à pression dynamique (8) selon l'une des revendications 1 ou 2, **caractérisée en ce que** la première entrée de fluide de travail (12) et la deuxième entrée de fluide de travail (13), à partir de leurs ouvertures d'entrée (9, 11), s'étendent tout d'abord l'une vers l'autre et ensuite respectivement en un coude (20, 21) dans une direction commune.

4. Pompe à pression dynamique (8) selon la revendication 3, **caractérisée en ce qu'**une déviation (22) commune se raccorde aux deux coudes (20, 21) dans le sens de l'écoulement du fluide de travail, notamment avec un angle de 70° à 110°, de 80° à 100° ou de 90°.

5. Pompe à pression dynamique (8) selon la revendication 4, **caractérisée en ce que** la paroi de séparation (19) se prolonge jusque dans la déviation (22) ou jusqu'à une extrémité arrière de la déviation (22), vue dans le sens de l'écoulement du fluide de travail, et se raccorde ensuite au canal de fluide de travail commun (14), lequel s'étend notamment en direction de l'axe de rotation (10) ou parallèlement à celui-ci.

6. Pompe à pression dynamique (8) selon l'une des revendications 1 à 5, **caractérisée en ce que** le canal de fluide de travail commun (14) possède une longueur de conduction du fluide de travail qui est égale à un multiple de la longueur de conduction du fluide de travail respectivement depuis l'une des deux ouvertures d'entrée (9, 11) jusqu'au canal de fluide de travail commun (14), notamment au moins le triple, le quintuple, le septuple ou le décuple de la longueur.

7. Pompe à pression dynamique (8) selon l'une des revendications 1 à 6, **caractérisée en ce que** le canal de fluide de travail commun (14) possède un diffuseur (18) .

8. Machine hydrodynamique
comprenant une roue primaire (1) à aubage pouvant être entraînée par le biais d'un axe de rotation (10) et une roue secondaire (2) à aubage, lesquelles forment ensemble un espace de travail (4) pouvant être ou étant rempli d'un fluide de travail et
comprenant une pompe à pression dynamique (8) destinée à décharger au moins indirectement le fluide de travail hors de l'espace de travail (4) ou hors de la machine hydrodynamique, selon l'une des revendications 1 à 7,
la première et la deuxième entrée de fluide de travail (12, 13) de la pompe à pression dynamique (8) faisant saillie dans l'espace de travail (4) ou dans un espace voisin (6) reliée à celui-ci avec conduction du fluide de travail et la première et la deuxième ouverture d'entrée (8, 11) étant orientées dans la direction périphérique par rapport à l'axe de rotation (10).

9. Machine hydrodynamique selon la revendication 8, **caractérisée en ce que** la machine hydrodynamique est réalisée sous la forme d'un accouplement hydrodynamique, la roue secondaire (2) à aubage pouvant être entraînée par la roue primaire (1) à aubage par le biais de l'axe de rotation (10) au moyen d'un circuit de fluide de travail dans l'espace de travail (4), et un espace de réserve étant présent pour le fluide de travail qui ne se trouve pas dans l'espace de travail, lequel est raccordé à la pompe à pression dynamique (8) de telle sorte que celle-ci transporte dans l'espace de réserve le fluide de travail déchargé au moins indirectement hors de l'espace de travail (4), l'espace de réserve étant disposé lui aussi tournant par le biais de l'axe de rotation (10) ou en position fixe.

10. Machine hydrodynamique selon l'une des revendications 8 et 9, **caractérisée en ce que** les entrées de fluide de travail (12, 13) de la pompe à pression dynamique (8) sont maintenues en position fixe ou tournent par le biais de l'axe de rotation (10) par entraînement de la pompe à pression dynamique (8).
